# EUROPEAN PATENT SPECIFICATION

(11) **EP 3 756 494 B1**
(45) Date of publication and mention of the grant of the patent: **16.08.2023**
(21) Application number: 20182670.8
(22) Date of filing: 26.06.2020
(51) Int. Cl.: A41D 13/018, B60R 21/00, B60R 21/33

(54) **DEVICE FOR CONTROLLING THE UNWINDING OF AN AIRBAG ACTUATION CABLE**
VORRICHTUNG ZUM KONTROLLIEREN DES ABWICKELNS EINES AKTIVIERUNGSKABELS EINES AIRBAGS
DISPOSITIV DE COMMANDE DE DÉROULEMENT D'UN CÂBLE D'ACTIONNEMENT D'UN AIRBAG

(30) Priority: 27.06.2019 IT 201900010314
(43) Date of publication of application: 30.12.2020
(73) Proprietor: D.P.I. Safety S.r.l., 20121 Milano (IT)
(72) Inventor: Colombo, Fabio Giovanni Fedele, 20137 Milano (IT)
(74) Representative: Di Bernardo, Antonio

(56) References cited:
- EP-A1- 1 668 999
- WO-A1-2004/092000
- US-A1- 2007 069 507

## Description

### TECHNICAL FIELD

The present invention relates to the sector of restraint and activation systems for airbag devices. In particular, the invention relates to a device for controlling the unwinding of an actuation cable of an airbag.

### BACKGROUND ART

Airbag jackets are currently available on the market. These are garments which are worn by motorcyclists and which comprise therein an airbag which can be activated through activation devices which can be electronic or mechanical.

The electronic activation devices use the measurements made by one or more sensors (e.g., accelerometers, proximity sensors, gyroscopes, etc.) to detect the motorcyclist's fall. When this occurs, the activation device activates an airbag filler which opens and protects the motorcyclist during the fall.

However, the electronic activation devices require a very careful design which allows to distinguish with certainty when a certain acceleration, or a certain separation of the motorcyclist from the saddle, is the result of a fall and not, instead, of the normal use of the vehicle. Furthermore, these devices require being powered, which entails periodic verification and/or replacement of the power supply system.

An example of these systems is described in US2007069507. An electric cable is wound on a reel device fixed to the motorcycle. In the use, the motorcyclist unwinds the cable by pulling a free end of the same cable which then attaches to a filler opening system present in the jacket worn. The reel comprises an electronic detection system which determines the length of the unwound cable and the unwinding speed and acceleration. As a function of the measurements made, the detection system determines whether the motorcyclist has been separated from the vehicle and sends, through the electric cable, a command signal to the jacket which causes the opening of the airbag. This solution is however very bulky and the electric cable, if not well sized, could wear out with use.

JP5421166B2 instead describes a solution which provides for the electronic activation of the airbag in which communication between the jacket and the control unit located on the motorcycle takes place by means of radio communication. However, this solution is complex and requires appropriate measures to make the communication between the jacket and the vehicle secure and robust.

The mechanical actuation devices are generally of simpler construction and provide an actuation cable which, when pulled beyond a certain limit (for example due to a fall of the motorcyclist), activates the airbag filler.

According to a first solution, the cable is a flexible cable, one end of which is fixed to the airbag filler, and the other end of which is fixed to the vehicle. In case of separation from the vehicle, the cable is pulled and the airbag opens. However effective it may be, this solution requires that the cable extend for the maximum extension thereof to activate the filler, therefore it requires a certain amount of activation time.

In a second solution described in EP2576295, the two ends of the cable are fixed on one side to the vehicle and on the other to a stem which, when subjected to traction, breaks and releases a perforating tip which releases the gas kept pressurized in a special container, thus allowing the inflation of the airbag. However effective it may be, this solution has the limitation that the stem could break for reasons not dependent on the traction of the cable, moreover the intervention time depends on the cable length.

The need for a wearable airbag actuation system is therefore felt (in a jacket for motorcyclists or for operators of other vehicles such as personal watercraft, or for horseback riders on horses), which is quick, reliable and simple to build.

### OBJECTS AND SUMMARY OF THE INVENTION

An object of the present invention is to overcome the disadvantages of the prior art.

In particular, an object of the present invention is to provide a device for controlling the unwinding of an airbag actuation cable which is simple to manufacture and use, while simultaneously maintaining high reliability over time.

Another object of the present invention is to provide a device for controlling the unwinding of an actuation cable characterized by a low weight and dimensions, so that it can be placed in association with a protective garment to be worn during the use of a motorized vehicle.

A further object of the present invention is to provide a device for controlling the unwinding of an actuation cable which is overall inexpensive compared to the devices of the background art.

Finally, an object of the present invention is to provide a device for controlling the unwinding of an airbag system actuation cable which can be customizable, also as regards the reaction sensitivity to external stresses, both on the basis of the type of motor vehicle driven, and according to specific needs and/or driving conditions.

These and other objects of the present invention are achieved by a device incorporating the features of the accompanying claims, which form an integral part of the present description.

According to a first aspect, the present invention relates to a device for controlling the unwinding of an airbag actuation cable, comprising a main body inside which a movable element and a locking system of the movable element are housed. The movable element is rotatably arranged in said main body and comprises winding devices, arranged on a first surface of the movable element itself, and configured to wind and unwind the actuation cable. The movable element also comprises a retaining device arranged on a second surface of the movable element itself and configured to hold an end of the actuation cable. The locking system of the movable element comprises a crown element, integral with the main body and having a profile provided with a plurality of recesses facing a second surface of the movable element, said second surface being arranged at one end of the movable element opposite the first surface. The locking system of the movable element further comprises a blocking assembly, arranged on said second surface and comprising a helical spring which works in compression and which has at least one central portion free from constraints. The blocking assembly further comprises a shaped element, hinged to the movable element, which has an engagement section adapted to engage in said recesses, and a housing seat in which a first end of the helical spring is constrained; the housing seat is arranged such that, during the winding and unwinding of the actuation cable, the thrust of the spring on the seat maintains the engagement section distant from said recesses. The blocking assembly further comprises a matching element in which a second end of the helical spring is constrained.

According to this solution, a device is obtained, which allows to quickly block the unwinding of the winding cable, if an unexpected event occurs, even before such cable is unwound for the entire length thereof, also improving the response time of the device itself.

In accordance with a further aspect, the invention relates to a protective garment integrating an airbag system which comprises a device for controlling the unwinding of a cable for the actuation of said airbag system, in which the airbag system is activatable by means of the removal of an occlusion element; the occlusion element is constrained to the device for controlling the unwinding of the actuation cable; the actuation cable is wound in the device for controlling the unwinding and is connected, by means of an end thereof, to a connection device configured to connect the actuation cable to a motor vehicle; the device for controlling the unwinding of the actuation cable is a device according to the present invention.

According to this solution, the device for controlling the unwinding of the actuation cable according to the invention is an integral part of the protective garment and is joined to the occlusion elements by means of one or more connectors which extend from the main body; an integrated and highly reliable system is thus created in a simple and inexpensive way, comprising both an airbag and the devices for controlling the opening of the same.

The present invention in at least one of the aforesaid aspects may have at least one of the following preferred features, taken individually or in combination with any other one of the preferred characteristics described.

Preferably the shaped element is hinged to the movable element by means of a pin, around which it is movable in rotation between a release position, in which the helical spring works in compression and the actuation cable can be unwound and rewound by the winding devices, and a lock position in which, following an acceleration pulse or a high rotation speed of the movable element, the helical spring flexes and the shaped element is engaged in one of said recesses.

In this way, exploiting the Euler's principle of buckling, the characteristics of the device object of the invention are such that, when the actuation cable is stressed during unwinding by a force greater than a threshold value, the centrifugal force acting on the shaped element causes the rotation around the pin and involves a relative compression action which substantially acts in an axial direction on the helical spring until, after exceeding Euler's critical load value (also called Euler's buckling), it causes the deflection so as to allow the free rotation of the shaped element up to a position in which it is engaged with one of the recesses on the crown element.

The particular structure of the device therefore advantageously allows the use of a helical spring which works in compression until reaching Euler's critical buckling load value, acting on the helical spring itself.

In this way, during the normal use of the device, the actuation cable is free to slide, thus allowing ample freedom of movement for the user of the device and, on the other hand, the locking of the unwinding of the cable is advantageously carried out when an abnormal stress occurs.

Preferably, the shaped element has at least one cavity configured to house a removable mass.

According to this embodiment, the mass of the shaped element is substantially concentrated in a point, coinciding with the position of the cavity, and therefore allows easier sizing of the elements of the device as well as their mutual position, so as to precisely determine the acting forces during the operation thereof and consequently the reaction times of the device.

In this way, moreover, it is possible to customize the control device according to the characteristics of use as well as the specific needs of the user, sizing from time to time the measurement of the mass inserted in the cavity, according to the desired level of reactivity with respect to stresses.

Preferably said cavity is positioned in proximity to said engagement section so as to present a distance from the axis of the pin which is greater than the distance between the axis of the pin and the housing seat.

According to such configuration, it is possible to improve the efficiency of the response to the stresses acting on the control device, since the compression action generated by the shaped element on the helical spring can exploit a longer arm (given by the distance of the cavity hosting the removable mass with respect to the centre of rotation coinciding with the centre of symmetry of the pin) with respect to the arm exploited by the compression action provided by the helical spring on the shaped element.

Preferably, said blocking assembly comprises a stop element configured to limit the rotation of the shaped element and keep it, jointly with the exerted compression action of the helical spring, in the release position.

In this way, the shaped element is advantageously kept in a fixed position so as to avoid undesired oscillations of the shaped element itself, during the use of the device and therefore making the system more stable.

Preferably the main body comprises a base element and a covering element configured to be mutually connected in a removable manner, the base element having a base surface from which extends a cylindrical pin on which the movable element is arranged, rotatable with respect to the axis of said cylindrical pin.

In this way, a protection structure is created for the control device, which also allows a functional access to the components contained therein for any replacement or modification thereof.

Preferably the shaped element comprises a concavity configured to engage said cylindrical pin, when the shaped element is in the lock position.

In this way, also in this position an element to contain the movement of the shaped element is obtained, allowing to increase the stability of the device with respect to external stresses.

Preferably, the winding devices comprise a first supporting element, of a substantially annular shape and extending from the first surface of the movable element, configured to support the actuation cable during winding.

Preferably, the winding devices comprise an abutment disk configured to be associated with the movable element so as to make it integral with the rotary movement of the movable element around the axis of the cylindrical pin and to define, jointly with said movable element and with said first supporting element, a housing volume for an elastic return element.

According to this configuration, the elements arranged for unwinding/rewinding the actuation cable are advantageously grouped in a "spool" system, which is separate from the locking system and therefore does not interfere with the correct functioning thereof; this "spool" system is furthermore advantageously compact and easily configurable on the basis of the size of the actuation cable used and/or of the additional elements which form the control device.

Preferably, during the unwinding and rewinding of the actuation cable, the shaped element is in the release position, at a distance from the crown element whose value is greater than 1 mm.

According to this configuration, an easy rotation of the shaped element integral with the rotation movement of the movable element is ensured, ensuring the absence of mutual interference of the movable parts of the device during the unwinding and rewinding of the actuation cable, during the use thereof.

Further features and advantages of the present invention will be more apparent from the description of the accompanying drawings.

### BRIEF DESCRIPTION OF THE DRAWINGS

The invention will be described below with reference to some examples, provided for explanatory and non-limiting purposes, and illustrated in the accompanying drawings. These drawings illustrate different aspects and embodiments of the present invention and, where appropriate, reference numerals illustrating similar structures, components, materials and/or elements in different figures are indicated by similar reference numbers.
Figure 1 shows an overall schematic front view of a device for controlling the unwinding of an actuation cable of an airbag according to an embodiment of the present invention;
figures 2a and 2b show a schematic front view of an assembly belonging to the device of figure 1 in respective operating configurations
figure 3 illustrates an exploded view of the device of figure 1 in a first perspective view, with some parts removed to better highlight others;
figure 4 illustrates an exploded view of the device of figure 1 in a second perspective view, with some parts removed to better highlight others; and
figure 5 is a schematic front view of an element of the assembly of figures 2a and 2b.

### DETAILED DESCRIPTION OF THE INVENTION

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to", unless otherwise indicated.

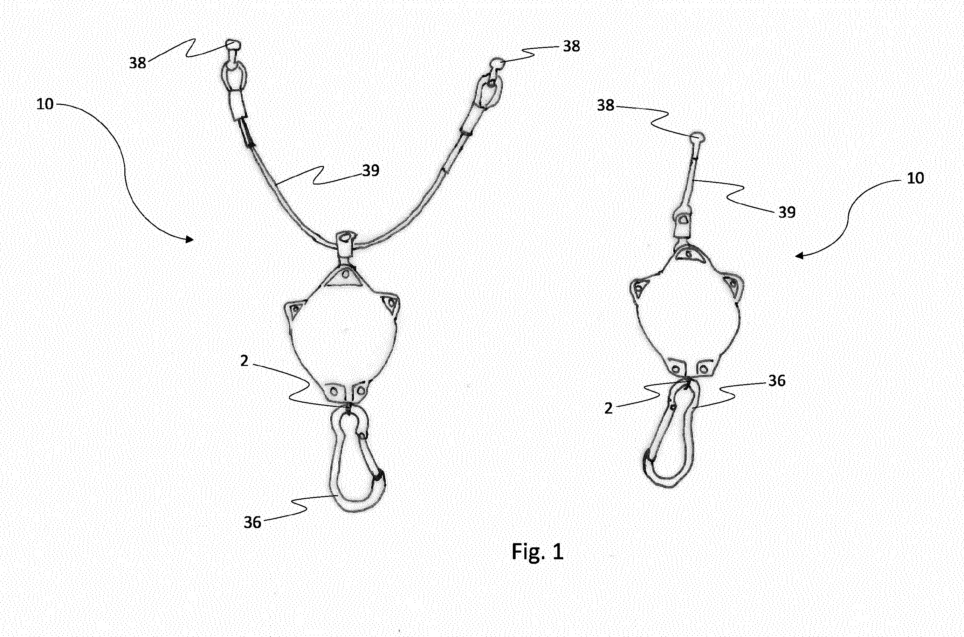

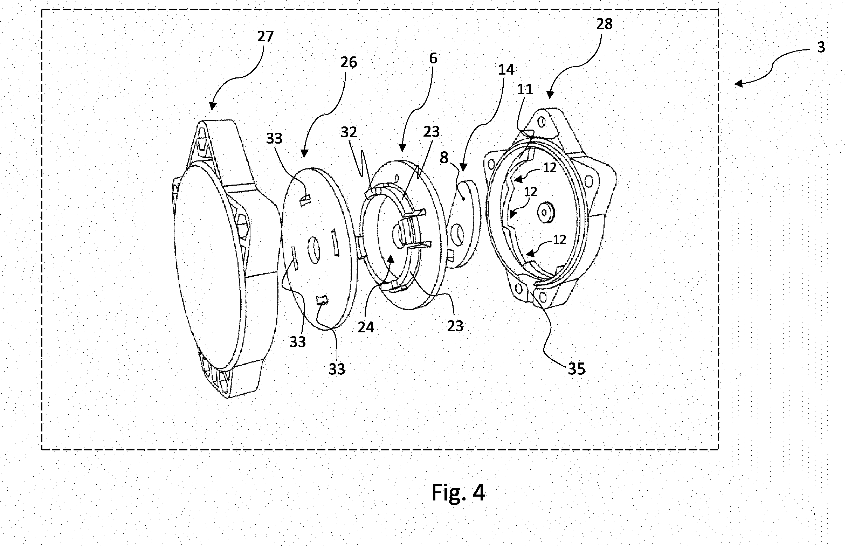

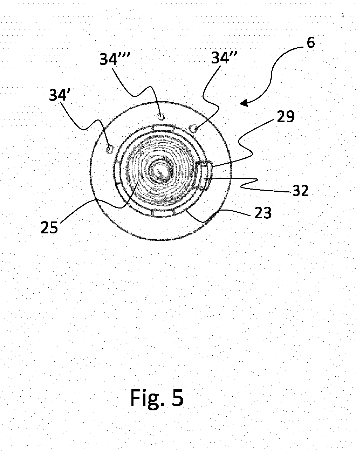

With reference to Figures 1-5, a device for controlling the unwinding of an airbag actuation cable according to the present invention is illustrated.

With reference to figure 1, the reference number 10 generally indicates a device for controlling the unwinding of an actuation cable, in accordance with the present invention.

The device 10 has a main body 3 which comprises a base element 27 and a covering element 28 configured to be mutually connected preferably in a removable manner, for example by means of a threaded connection and/or hooking means.

The base element 27 has a substantially planar and preferably circular base surface 4, from the centre of which extends a cylindrical pin 5 having a longitudinal axis "X-X" perpendicular to said base surface 4.

The device 10 further comprises a movable element 6, connected to the cylindrical pin 5 by means of a through-hole 9 obtained in a central position of the movable element 6, which is movable in rotation about the axis "X-X" of the cylindrical pin 5.

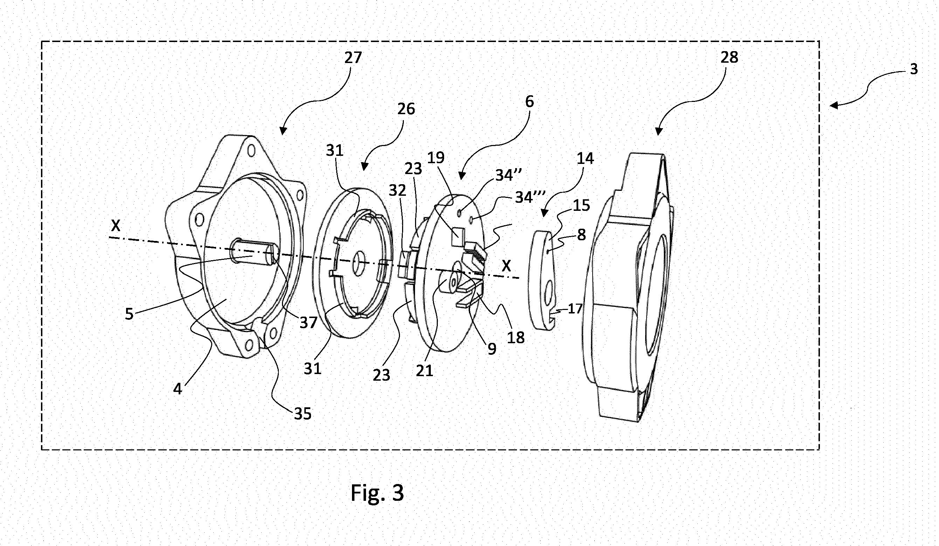

The movable element 6 comprises winding devices arranged on a first surface of the element itself, which are configured to wind and unwind the actuation cable 2 during the operation of the device 10. In particular, as shown in figures 3, 4 and 5, these winding devices comprise a first supporting element 23, having a substantially annular shape which extends from a first surface of the movable element 6, and is configured to support the actuation cable 2 during winding.

The winding devices further comprise an complementary disk 26 comprising a second supporting element 31 of substantially annular shape, which extends from the complementary disk 26 facing the first supporting element 23, and configured to support the actuation cable 2 during winding.

Preferably, the first supporting element 23 has a plurality of engagement elements 32 configured to be associated with corresponding housings 33 present in said complementary disk 26, so as to make the movable element 6 integral with the complementary disk 26 itself. In the assembled configuration of the movable element 6 with the complementary disk 26, the first supporting element 23 and the second supporting element 31 are brought into contact, obtaining a substantially planar and continuous winding surface, on which the actuation cable 2 is wound.

Preferably, said winding surface is arranged substantially perpendicular to the first surface of the movable element 6 and has a width greater than or equal to 4 mm and less than or equal to 10 mm. In this way, the actuation cable 2 can be easily wound and unwound thereon, avoiding deformations of the same.

The first supporting element 23 and the second supporting element 31 also define a housing volume 24 in which an elastic element 25 is positioned. Preferably, this elastic element 25 is formed by a flat or ribbon spiral spring, which is constrained to the movable element 6 by means of a first end portion, for example shaped according to a ring 29. Preferably the ring 29 is obtained by folding a free end of the spiral spring and is connected to one of the engagement elements 32 obtained along the annular extension of the first supporting element 23. The elastic element 25 is also connected to the cylindrical pin 5 by means of a second end portion, preferably engaged in a groove 37 present on the cylindrical pin 5 itself.

Therefore, a simple and compact "spool" structure is advantageously created, for a correct and efficient unwinding and rewinding of the actuation cable 2. This spool structure is also easily configurable on the basis of the size and length of the actuation cable 2 used, thus making the device 10 versatile in that it makes it possible to use it in a differentiated way according to the specific needs of the end user.

The device 10 also has a locking system for the movable element 6, comprising a crown element 11 and a blocking assembly adapted to allow stopping the unwinding movement of the actuation cable, induced by the interruption of the rotary movement of the movable element 6.

The crown element 11 is preferably integral with the main body 3, in particular being obtained in the covering element 28, and has a profile provided with a plurality of recesses 12 facing towards the movable element 6. In a preferred configuration, the plurality of recesses 12 faces a second surface of said movable element 6, opposite said first surface. Preferably the crown element has a sawtooth profile which defines a succession of alternating protrusions and indentations which form the aforementioned recesses 12.

The blocking assembly is preferably arranged on said second surface of the movable element 6 and comprises a helical spring 13, which works in compression and which has at least a central portion free from constraints.

The blocking assembly further comprises a shaped element 14 hinged to the movable element 6, and which comprises an engagement section 15, adapted to engage said recesses 12 and a housing seat 17 in which a first end of the helical spring 13 is constrained. In the blocking assembly a matching element 18 is also provided in which a second end of the helical spring 13 and a retaining device 7 are constrained, adapted to hold an end of the actuation cable 2.

Said retaining device 7 can be formed by a guide having open ends, so as to allow the passage of the actuation cable 2, and preferably having mutually facing inner walls having a surface such as to disadvantage any sliding movements of the actuation cable 2; such surfaces can for example be formed by knurled and/or notched surfaces and/or having adhesiveness characteristics. The actuation cable 2 can have an enlargement at an end portion thereof, which is placed outside the aforementioned guide, allowing further improvement of the stability of the anchoring of the actuation cable 2 to the retaining device 7 itself.

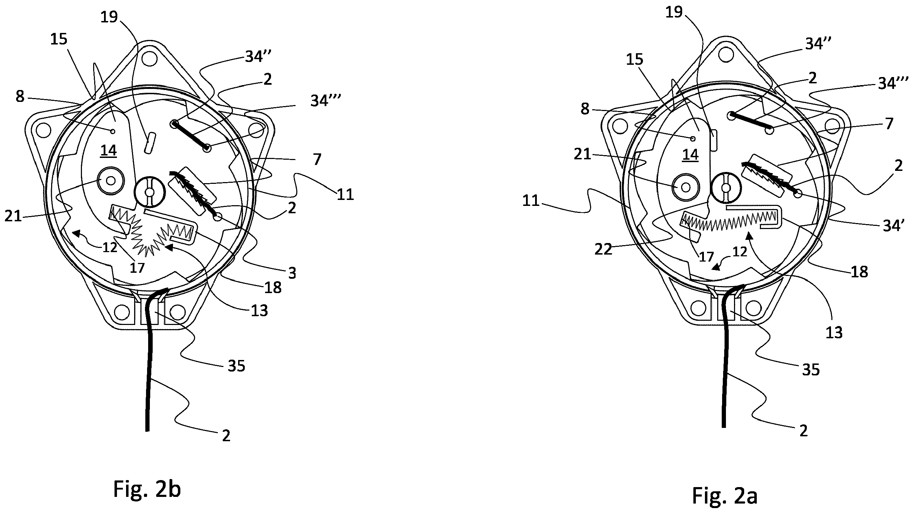

The shaped element 14 is preferably hinged to the movable element 6 by means of a pin 21, around which it is movable in rotation between a release position, shown in fig. 2a, in which the actuation cable 2 can be unwound and rewound by the winding devices, and a stop position, shown in fig. 2b, in which the shaped element 14 is engaged in one of said recesses 12.

The shaped element 14 preferably has at least one cavity 8 configured to house a removable mass. Preferably the cavity 8 is positioned in proximity to the engagement section 15 so as to present a distance from the axis of the pin 21 greater than the distance between the axis of the pin 21 and the housing seat 17. Preferably the distance of said cavity 8 from the axis of the pin 21 is greater than or equal to 4 mm.

Preferably the blocking assembly comprises a stop element 19 configured to limit the rotation of the shaped element 14 and keep it, jointly with the exerted compression action of the helical spring 13, in the release position. In this way, the shaped element 14 is advantageously kept in a fixed position during the use of the device, so as to counteract any undesired oscillations of the shaped element itself and therefore make the system more stable.

Preferably, during the unwinding and rewinding of the actuation cable 2, the shaped element 14 is in the release position, at a distance from the crown element 11 whose value is greater than 1 mm.

The shaped element 14 also preferably has a concavity 22 configured to engage said cylindrical pin 5, when the shaped element 14 is in a stop position. In this way, an element for containing the movement of the shaped element can advantageously be provided, allowing to increase the stability of the device with respect to external stresses during the operation thereof.

In an assembly step prior to the use of the device 10, a path is suitably prepared along which the actuation cable 2 is passed starting from the retaining device 7, to which it is fixed by means of an end thereof, up to an outlet section 35 through which it exits from the main body 3 in order to be connected to a suitable connection device 36.

According to a preferred embodiment, the first end of the cable 2 is engaged with the retaining device 7, positioned on the second surface of the movable element 6. The actuation cable 2 is then passed through a first through-hole 34', towards the first surface of the movable element 6 opposite said second surface, and then wound on the winding surface defined by the first and second supporting elements 23, 31, clockwise and at an angle of about 300°. The actuation cable 2 is then passed through a second through-hole 34" towards the second surface and then again inserted into a third through-hole 34‴ so as to be re-introduced towards the first surface of the movable element 6 and thus be wound in turns on the winding surface. The actuation cable 2 is finally inserted in the outlet section 35 and the second end thereof connected to the connection device 36.

This preferred path advantageously allows the tensile stress created by the cable to be divided over several sections so that, when the cable reaches the end of its stroke, or the unwinding thereof is interrupted as a result of the activation of the locking system, the tensile force acts mainly on the winding devices and not on the retaining device 7, thus ensuring the maintenance of the constraint between the first end of the actuation cable 2 and the retaining device 7.

The device 10 advantageously finds multiple possible uses, in particular linked to safety problems or even simply to the need to have a movement stop system which is simple and has a high response speed.

In particular, in a preferred form of use, the device 10 is used in association with a protective garment integrating an airbag system. According to this use, the protective garment houses one or more gas generators (generally in the form of cartridges) which can be activated by means of respective charges, triggered by a rapid extraction of occlusion elements 38, arranged in an inlet section of said gas generators (not shown in the figures). The garment therefore has one or more cavities, configured to receive the gas blown at high speed when the airbag system is activated, so as to obtain an appropriate protection of the user with respect to impacts. According to the invention, the device 10 is an integral part of the protective garment and is joined to the occlusion elements 38 by means of one or more connectors 39 which extend from the main body 3.

In the use of the device 10, a user driving a motor vehicle partially unwinds the actuation cable 2 so as to connect the device 10 to the motor vehicle itself by means of the connection device 36. When the actuation cable is subjected to tensile stress, for example due to movements of the user with respect to the body of the motor vehicle, the centrifugal force tends to rotate the shaped element away from the cylindrical pin 5, but it is kept in the release position by the compression action performed by the helical spring 13. In this way, the actuation cable 2 can be unwound and rewound by means of the winding devices, in particular thanks to the action carried out by the elastic element 25, allowing both micro-movements and macro-movements of the user while driving the motor vehicle.

The particular shape of the blocking assembly allows to apply the principle of Euler's critical buckling load to the helical spring 13, allowing to size the device 10 so as to determine the locking of the actuation cable 2 in a simple and safe way, upon the confirmation of a stress deemed abnormal. In fact, the helical spring 13 initially operates in compression, to keep the shaped element 14 distant from the plurality of recesses 12. Following the effect of a centrifugal force exerted on the shaped element 14, due to an acceleration pulse of rotation or a high rotation speed of the movable element 6, the helical spring 13 flexes according to the principle of overcoming Euler's critical load.

More particularly, the helical spring 13 is in fact constrained at the ends thereof respectively in the seat 17 of the shaped element 14 and in the matching element 18 and has a central portion free from constraints. When a traction acting on the actuation cable 2 exceeds a certain threshold value, the value of the centrifugal force acting on the shaped element 14 exceeds the value of the compression force exerted by the helical spring 13 thereon, causing a relative compression action which acts on the helical spring 13 on one end thereof until, once the critical load value is exceeded, it causes its immediate failure and therefore deflection in the central portion, which is free from constraints. The shaped element 14 is therefore free to rotate to the stop position, where it is engaged with one of the recesses 12 present on the crown element 11, causing the rotation of the movable element 6 to be blocked and consequently to stop the unwinding of the cable 2. The particular structure of the device 10 therefore advantageously allows the use of a helical spring 13 which works in compression until reaching Euler's critical buckling load value acting on the helical spring 13 itself.

Upon reaching this stop position, therefore, the actuation cable 2, connected to the motorcycle by means of the connection device 36, exerts a tensile action on the occlusion element 38 through the relative connector 39, triggering the filler which allows the gas leak from the gas generator and the consequent inflation of the cavity present on the garment.

The device 10 for controlling the unwinding of an actuation cable of an airbag system can be advantageously customized both on the basis of the type of motor vehicle driven and on the basis of specific needs and/or driving conditions.

In particular, it is possible to suitably choose the size of the mass inserted in the cavity 8, depending on the desired level of reactivity with respect to stresses. For example, it is possible to provide shaped elements 14, having the same structure and dimensions, but differentiated according to the size of the cavity 8, so as to accommodate masses of different sizes. The mass to be used can be chosen, for example, based on the type of driving, i.e., a smaller mass may be provided for the use of the motorcycle at high speeds (e.g., competitions), while it may be of a larger size for use in city or Enduro riding. According to this sizing possibility, the user can use the same device 10 in various conditions of use, simply by replacing only the shaped element 14 from time to time.

However, other possible configurations of the device 10 are not excluded, such as for example shaped elements 14 of different sizes and shapes, not having cavities 8 for housing a mass. According to this possible variant, the relative arrangement between helical spring 13 and shaped element 14 is suitably defined during the design phase, so as to exploit the entire mass of the shaped element 14 to achieve the critical load of the helical spring 13.

## Claims

1. Device (10) for controlling the unwinding of an actuation cable (2) of an airbag, comprising a main body (3) inside which a movable element (6) and a locking system of the movable element (6) are housed, wherein
- the movable element (6) is arranged rotatable in said main body (3) and comprises:
- winding devices, arranged on a first surface of said movable element (6), and configured to wind and unwind the actuation cable (2); and
- a retaining device (7) arranged on a second surface of said movable element (6) and configured to hold an end of the actuation cable (2); and wherein
- the locking system of the movable element (6) comprises:
- a crown element (11) integral with the main body (3) and having a profile provided with a plurality of recesses (12) facing a second surface of said movable element (6), said second surface being arranged at an end of the movable element opposite the first surface; and
- a blocking assembly, arranged on said second surface of the movable element (6);
and wherein said blocking assembly comprises:
- a helical spring (13) which works in compression and has at least one central portion free from constraints;
- a shaped element (14) hinged to the movable element (6), said shaped element (14) comprising an engagement section (15), adapted to engage in said recesses (12), and a housing seat (17) in which a first end of the helical spring (13) is constrained, the housing seat (17) being arranged such that, during the winding and unwinding of the actuation cable (2), the thrust of the spring on the seat (17) maintains the engagement section (15) distant from said recesses (12);
- a matching element (18) in which a second end of the helical spring (13) is constrained.

2. Device (10) according to claim 1, wherein said shaped element (14) is hinged to the movable element (6) by means of a pin (21), around which it is movable in rotation between a release position, in which the helical spring (13) works in compression and the actuation cable (2) can be unwound and rewound by the winding devices, and a lock position in which, following an acceleration pulse or a high rotation speed of the movable element (6), the helical spring (13) flexes and the shaped element (14) is engaged in one of said recesses (12).

3. Device (10) according to claim 1 or 2, wherein said shaped element (14) has at least one cavity (8) configured to house a removable mass.

4. Device (10) according to claim 3, wherein said cavity (8) is positioned in proximity to said engagement section (15) so as to present a distance from the axis of the pin (21), greater than the distance between the axis of the pin (21) and the housing seat (17).

5. Device (10) according to any one of claims 2 to 4, wherein said blocking assembly comprises a stop element (19) configured to limit the rotation of the shaped element (14) and keep it, jointly with the exerted compression action of the helical spring (13), in the release position.

6. Device (10) according to claim 1, wherein the main body (3) comprises a base element (27) and a covering element (28) configured to be mutually connected in a removable manner, the base element (27) having a base surface (4) from which extends a cylindrical pin (5) on which the movable element (6) is arranged rotatable with respect to the axis of said cylindrical pin (5).

7. Device (10) according to any one of claims 2 to 6, wherein the shaped element (14) comprises a concavity (22) configured to engage said cylindrical pin (5) when the shaped element (14) is in the lock position.

8. Device (10) according to claim 1, wherein said winding devices comprise a first supporting element (23), of a substantially annular shape and extending from the first surface of the movable element (6), configured to support the actuation cable (2) during winding.

9. Device (10) according to claim 8, wherein said winding devices comprise a complementary disk (26) configured to be associated with the movable element (6) so as to make it integral with the rotary movement of the movable element (6) around the axis of the cylindrical pin (5) and to define, jointly with said movable element (6) and with said first supporting element (23), a housing volume (24) for an elastic element (25).

10. Device (10) according to any one of claims from 2 to 9, wherein during the unwinding and rewinding of the actuation cable (2), the shaped element (14) is in the release position, at a distance from the crown element (11) whose value is greater than 1 mm.

11. Protective garment integrating an airbag system and comprising a device for controlling the unwinding of a cable (2) for the actuation of said airbag system, said airbag system being activatable by means of the removal of an occlusion element (38); wherein
the occlusion element (38) is constrained to the device for controlling the unwinding of the actuation cable (2) and the actuation cable (2) is wound in the device for controlling the unwinding and is connected, by means of an end thereof, to a connection device (36) configured to connect the actuation cable (2) to a motor vehicle; and wherein
the device for controlling the unwinding of the actuation cable (2) is a device (10) according to one or more of the claims from 1 to 10.

## Patentansprüche

1. Vorrichtung (10) zum Steuern des Abwickelns eines Betätigungskabels (2) eines Airbags, umfassend einen Hauptkörper (3), in dem ein bewegliches Element (6) und ein Verriegelungssystem des beweglichen Elements (6) untergebracht sind, wobei
- das bewegliche Element (6) drehbar in dem Hauptkörper (3) angeordnet ist und umfasst:
- Wickelvorrichtungen, die auf einer ersten Oberfläche des beweglichen Elements (6) angeordnet sind und konfiguriert sind, um das Betätigungskabels (2) zu wickeln und abzuwickeln; und
- eine Haltevorrichtung (7), die auf einer zweiten Oberfläche des beweglichen Elementes (6) angeordnet ist und konfiguriert ist, um ein Ende des Betätigungskabels (2) zu halten; und wobei
- das Verriegelungssystem des beweglichen Elements (6) umfasst:
- ein Kronenelement (11), das mit dem Hauptkörper (3) integral ist und ein Profil aufweist, das mit einer Vielzahl von Aussparungen (12) bereitgestellt ist, die einer zweiten Oberfläche des beweglichen Elements (6) zugewandt sind, wobei die zweite Oberfläche an einem Ende des beweglichen Elements gegenüber der ersten Oberfläche angeordnet ist; und
- eine Blockierbaugruppe, die auf der zweiten Oberfläche des beweglichen Elements (6) angeordnet ist;
und wobei die Blockierbaugruppe umfasst:
- eine Schraubenfeder (13), die auf Druck arbeitet und mindestens einen zentralen Abschnitt aufweist, der frei von Spannungen ist;
- ein geformtes Element (14), das an dem beweglichen Element (6) klappbar ist, wobei das geformte Element (14) einen Eingriffsabschnitt (15), der dazu geeignet ist, in die Aussparungen (12) einzugreifen, und einen Gehäusesitz (17) umfasst, in dem ein erstes Ende der Schraubenfeder (13) eingespannt ist, wobei der Gehäusesitz (17) so angeordnet ist, dass während des Wickelns und Abwickelns des Betätigungskabels (2) der Druck der Feder auf den Sitz (17) den Eingriffsabschnitt (15) von den Aussparungen (12) entfernt hält;
- ein Anpassungselement (18), in dem ein zweites Ende der Schraubenfeder (13) eingespannt ist.

2. Vorrichtung (10) gemäß Anspruch 1, wobei das geformte Element (14) an dem beweglichen Element (6) mittels eines Bolzens (21) klappbar ist, um den es zwischen einer Freigabeposition, in der die Schraubenfeder (13) komprimiert arbeitet und das Betätigungskabel (2) durch die Wickelvorrichtungen abgewickelt und wieder aufgewickelt werden kann, und einer Verriegelungsposition, in der sich die Schraubenfeder (13) nach einem Beschleunigungsimpuls oder einer hohen Drehgeschwindigkeit des beweglichen Elements (6) biegt und das geformte Element (14) in eine der Aussparungen (12) eingreift, drehbar beweglich ist.

3. Vorrichtung (10) gemäß Anspruch 1 oder 2, wobei das geformte Element (14) mindestens einen Hohlraum (8) aufweist, der konfiguriert ist, eine entfernbare Masse unterzubringen.

4. Vorrichtung (10) gemäß Anspruch 3, wobei der Hohlraum (8) in der Nähe des Eingriffsabschnitts (15) angeordnet ist, um einen Abstand von der Achse des Bolzens (21) darzustellen, der größer ist als der Abstand zwischen der Achse des Bolzens (21) und dem Gehäusesitz (17).

5. Vorrichtung (10) gemäß einem der Ansprüche 2 bis 4, wobei die Blockierbaugruppe ein Anschlagelement (19) umfasst, das konfiguriert ist, um die Drehung des geformten Elements (14) zu begrenzen und es zusammen mit der ausgeübten Druckwirkung der Schraubenfeder (13) in der Freigabeposition zu halten.

6. Vorrichtung (10) gemäß Anspruch 1, wobei der Hauptkörper (3) ein Basiselement (27) und ein Abdeckelement (28) umfasst, die konfiguriert sind, um in einer abnehmbaren Weise miteinander verbunden zu sein, wobei das Basiselement (27) eine Basisfläche (4) aufweist, von der sich ein zylindrischer Bolzen (5) erstreckt, auf dem das bewegliche Element (6) in Bezug auf die Achse des zylindrischen Bolzens (5) drehbar angeordnet ist.

7. Vorrichtung (10) gemäß einem der Ansprüche 2 bis 6, wobei das geformte Element (14) eine Konkavität (22) aufweist, die konfiguriert ist, um mit dem zylindrischen Bolzen (5) in Eingriff zu kommen, wenn sich das geformte Element (14) in der Verriegelungsposition befindet.

8. Vorrichtung (10) gemäß Anspruch 1, wobei die Wickelvorrichtungen ein erstes Stützelement (23) umfassen, in einer im Wesentlichen ringförmigen Form, das sich von der ersten Oberfläche des beweglichen Elements (6) aus erstreckt und konfiguriert ist, um das Betätigungskabel (2) während des Wickelns zu stützen.

9. Vorrichtung (10) gemäß Anspruch 8, wobei die Wickelvorrichtungen eine komplementäre Scheibe (26) umfassen, die konfiguriert ist, um mit dem beweglichen Element (6) verbunden zu werden, um sie mit der Drehbewegung des beweglichen Elements (6) um die Achse des zylindrischen Stifts (5) integral zu machen und gemeinsam mit dem beweglichen Element (6) und dem ersten Stützelement (23) ein Gehäusevolumen (24) für ein elastisches Element (25) zu definieren.

10. Vorrichtung (10) gemäß einem der Ansprüche 2 bis 9, wobei sich das geformte Element (14) während des Abwickelns und Aufwickelns des Betätigungsseils (2) in der Freigabeposition in einem Abstand zum Kronenelement (11) befindet, der größer als 1 mm ist.

11. Schutzkleidung, in der ein Airbagsystem integriert ist, und die eine Vorrichtung zum Steuern des Abwickelns eines Kabels (2) für die Betätigung des Airbagsystems umfasst, wobei das Airbagsystem durch das Entfernen eines Verriegelungselements (38) aktivierbar ist; wobei
das Verriegelungselement (38) an der Vorrichtung zum Steuern des Abwickelns des Betätigungskabels (2) befestigt ist und das Betätigungskabel (2) in der Vorrichtung zum Steuern des Abwickelns gewickelt ist und mit einem Ende davon mit einer Anschlussvorrichtung (36) verbunden ist, die konfiguriert ist, um das Betätigungskabel (2) mit einem Kraftfahrzeug zu verbinden; und wobei
die Vorrichtung zum Steuern des Abwickelns des Betätigungskabels (2) eine Vorrichtung (10) gemäß einem oder mehreren der Ansprüche 1 bis 10 ist.

## Revendications

1. Dispositif (10) de commande du déroulement d'un câble d'actionnement (2) d'un coussin de sécurité gonflable, comprenant un corps principal (3) à l'intérieur duquel un élément mobile (6) et un système de verrouillage de l'élément mobile (6) sont reçus, dans lequel
- l'élément mobile (6) est disposé de manière rotative dans ledit corps principal (3) et comprend :
- des dispositifs d'enroulement, disposés sur une première surface dudit élément mobile (6), et configurés pour enrouler et dérouler le câble d'actionnement (2) ; et
- un dispositif de retenue (7) disposé sur une seconde surface dudit élément mobile (6) et configuré pour retenir une extrémité du câble d'actionnement (2) ; et dans lequel
- le système de verrouillage de l'élément mobile (6) comprend :
- un élément couronne (11) solidaire du corps principal (3) et ayant un profil pourvu d'une pluralité d'évidements (12) faisant face à une seconde surface dudit élément mobile (6), ladite seconde surface étant disposée à une extrémité de l'élément mobile opposée à la première surface ; et
- un ensemble de blocage, disposé sur ladite seconde surface de l'élément mobile (6) ;
et ledit ensemble de blocage comprenant :
- un ressort hélicoïdal (13) qui travaille en compression et a au moins une partie centrale exempte de contraintes ;
- un élément façonné (14) articulé à l'élément mobile (6), ledit élément façonnée (14) comprenant une section d'engagement (15), apte à s'engager dans lesdits évidements (12), et un siège de réception (17) dans lequel une première extrémité du ressort hélicoïdal (13) est contrainte, le siège de réception (17) étant disposé de telle sorte que, pendant l'enroulement et le déroulement du câble d'actionnement (2), la poussée du ressort sur le siège (17) maintient la section d'engagement (15) à distance desdits évidements (12) ;
- un élément d'adaptation (18) dans lequel une seconde extrémité du ressort hélicoïdal (13) est contrainte.

2. Dispositif (10) selon la revendication 1, dans lequel ledit élément façonné (14) est articulé à l'élément mobile (6) au moyen d'un pivot (21), autour duquel il est mobile en rotation entre une position de libération dans laquelle le ressort hélicoïdal (13) travaille en compression et le câble d'actionnement (2) peut être déroulé et réenroulé par les dispositifs d'enroulement, et une position de verrouillage dans laquelle, à la suite d'une impulsion d'accélération ou d'une vitesse de rotation élevée de l'élément mobile (6), le ressort hélicoïdal (13) fléchit et l'élément façonné (14) est engagé dans l'un desdits évidements (12).

3. Dispositif (10) selon la revendication 1 ou 2, dans lequel ledit élément façonné (14) a au moins une cavité (8) configurée pour recevoir une masse amovible.

4. Dispositif (10) selon la revendication 3, dans lequel ladite cavité (8) est positionnée à proximité de ladite section d'engagement (15) de façon à présenter une distance par rapport à l'axe du pivot (21) supérieure à la distance entre l'axe du pivot (21) et le siège de réception (17).

5. Dispositif (10) selon l'une quelconque des revendications 2 à 4, dans lequel ledit ensemble de blocage comprend un élément d'arrêt (19) configuré pour limiter la rotation de l'élément façonné (14) et le maintenir, conjointement avec l'action de compression exercée par le ressort hélicoïdal (13), dans la position de libération.

6. Dispositif (10) selon la revendication 1, dans lequel le corps principal (3) comprend un élément de base (27) et un élément de recouvrement (28) configurés pour être mutuellement reliés de manière amovible, l'élément de base (27) ayant une surface de base (4) à partir de laquelle s'étend un pivot cylindrique (5) sur lequel l'élément mobile (6) est disposé de manière rotative par rapport à l'axe dudit pivot cylindrique (5).

7. Dispositif (10) selon l'une quelconque des revendications 2 à 6, dans lequel l'élément façonné (14) comprend une concavité (22) configurée pour engager ledit pivot cylindrique (5) lorsque l'élément façonné (14) est dans la position de verrouillage.

8. Dispositif (10) selon la revendication 1, dans lequel lesdits dispositifs d'enroulement comprennent un premier élément de support (23), d'une forme sensiblement annulaire et s'étendant à partir de la première surface de l'élément mobile (6), configuré pour supporter le câble d'actionnement (2) pendant l'enroulement.

9. Dispositif (10) selon la revendication 8, dans lequel lesdits dispositifs d'enroulement comprennent un disque complémentaire (26) configuré pour être associé à l'élément mobile (6) de façon à le rendre solidaire du mouvement de rotation de l'élément mobile (6) autour de l'axe du pivot cylindrique (5) et à définir, conjointement avec ledit élément mobile (6) et avec ledit premier élément de support (23), un volume de réception (24) pour un élément élastique (25).

10. Dispositif (10) selon l'une quelconque des revendications de 2 à 9, dans lequel, pendant le déroulement et le réenroulement du câble d'actionnement (2), l'élément façonné (14) est dans la position de libération, à une distance de l'élément couronne (11) dont la valeur est supérieure à 1 mm.

11. Vêtement de protection intégrant un système de coussin de sécurité gonflable et comprenant un dispositif de commande du déroulement d'un câble (2) pour l'actionnement dudit système de coussin de sécurité gonflable, ledit système de coussin de sécurité gonflable étant apte à être activé au moyen du retrait d'un élément d'occlusion (38) ; dans lequel
l'élément d'occlusion (38) est contraint au dispositif de commande du déroulement du câble d'actionnement (2) et le câble d'actionnement (2) est enroulé dans le dispositif de commande du déroulement et est relié, au moyen d'une extrémité de celui-ci, à un dispositif de liaison (36) configuré pour relier le câble d'actionnement (2) à un véhicule à moteur; et dans lequel
le dispositif de commande du déroulement du câble d'actionnement (2) est un dispositif (10) selon une ou plusieurs des revendications de 1 à 10.
